# EUROPÄISCHE PATENTSCHRIFT

(11) **EP 0 668 791 B1**
(45) Veröffentlichungstag und Bekanntmachung des Hinweises auf die Patenterteilung: **10.07.2002**
(21) Anmeldenummer: 94901789.1
(22) Anmeldetag: 10.11.1993
(51) Int. Cl.: B01D 29/84, B01D 33/66

(54) **VERFAHREN ZUR MECHANISCHEN ENTFEUCHTUNG EINES FILTERKUCHENS UND VORRICHTUNG ZUR DURCHFÜHRUNG DES VERFAHRENS**
MECHANICAL PROCESS AND DEVICE FOR DEHUMIDIFYING A FILTER CAKE
PROCEDE ET DISPOSITIF MECANIQUE DE DESSECHAGE D'UN GATEAU DE FILTRE

(30) Priorität: 11.11.1992 DE 4238087
(43) Veröffentlichungstag der Anmeldung: 30.08.1995
(73) Patentinhaber: BOKELA Ingenieurgesellschaft für Mechanische Verfahrenstechnik mbH, 76131 Karlsruhe (DE)
(72) Erfinder: BOTT, Reinhard, D-76131 Karlsruhe (DE); KERN, Robert, 76131 Karlsruhe (DE); LANGELOH, Thomas, D-76131 Karlsruhe (DE)
(74) Vertreter: Wunderlich, Rainer, Dipl.-Ing.
(86) Internationale Anmeldenummer: EP9303148
(87) Internationale Veröffentlichungsnummer: WO9411084

(56) Entgegenhaltungen:
- WO-A-89/07972
- DE-B- 1 177 572
- US-A- 3 981 978
- US-A- 4 017 399
- Proceedings of the Fourth International Coal Preparation Congress 1962, Harrogate, Great Britain, 28. Mai 1962, P. 363-369, G. Burton: A new process for reducing the moisture content of filter cake
- V.D.GATHEN R.: 'Entwässerung von Flotationskonzentrat auf einem Dampfhaubenfilter' GLOCK AUF Bd. 99, Nr. 25, 1963, Seiten 1374 - 1375

## Beschreibung

Die Erfindung betrifft ein Verfahren zur mechanischen Entfeuchtung eines Filterkuchens gemäß dem Oberbegriff des Anspruchs 1 sowie eine Vorrichtung zur Durchführung dieses Verfahrens gemäß dem Oberbegriff des Anspruchs 7.

Bei der vorliegenden Filtration durch Gasdifferenzdruck treten während der Entfeuchtungsphase häufig Schrumpfrisse auf, die das Filtrationsergebnis entscheidend beeinträchtigen. Beeinflußt durch das physikalisch-chemische Zusammenwirken von Feststoff und Flüssigkeit bilden sich auf der Oberfläche oft charakteristische Rißmuster.

Diese Risse, die zumeist durch den gesamten Filterkuchen hindurch bis auf das Filtertuch reichen, treten vor allem bei der Verarbeitung feinkörniger, besonders mineralischer Feststoffe auf, die eine komplexe chemische Beschaffenheit besitzen. Es ist davon auszugehen, daß für die Rißbildung Kapillarkräfte, eine elektrostatische Wechselwirkung der Partikel sowie der pH-Wert und die Ionenart und Ionenkonzentration in der im Filterkuchen enthaltenen Flüssigkeit maßgeblich sind. Ebenso beeinflussen beispielsweise die Filtrationsdruckdifferenz, die Kuchenhöhe und das Filtertuch das Rißverhalten.

Auftretende Rißbildung beeinflußt die weitere Behandlung des Filterkuchens negativ. So kommt es bei der Vakuumsowie bei der Druckfiltration zu einer Bypass-Strömung von Luft durch die entstandenen Risse. Die Kuchenwaschung wird drastisch verschlechtert, da die Waschflüssigkeit bevorzugt durch die Risse und nicht durch das zu waschende Haufwerk läuft.

Zur Vermeidung von Rißbildung auf kuchenbildenden Filtern ist es bekannt, durch externes Aufbringen von Preßkräften den Filterkuchen zu verdichten und so bereits aufgebrochene Risse wieder zu schließen. Eine weitere bekannte Möglichkeit ist das erneute Zufiltrieren entstandener Risse, was jedoch zu einer Wiederbefeuchtung des bereits gebildetenen Filterkuchens und in der Folge zu erneuter Rißbildung führt.

Eine weitere Möglichkeit der Vermeidung von Rißbildung besteht darin, der zu filtrierenden Suspension geringe Mengen an Feststoffen, wie z.B. Zellstoff oder Glasfasern, zuzufügen, was jedoch aufgrund der damit verbundenen Kosten oder des negativen Einflusses auf eine geforderte Reinheit des entstehenden Stoffes nur selten realisierbar ist.

Aus der EP 0 179 446 B1 ist zur Vermeidung von Rißbildung die Ausgestaltung eines Filtermediums bekannt, bei dem durch das Vorsehen nichtfiltrierender Stege auf dem Filtermedium eine Einteilung in Filtrationsbereiche und damit verbunden eine Einteilung des erzeugten Filterkuchens in eine Mehrzahl kleinerer Abschnitte geschaffen wird.

Ein gattungsgemäßes Verfahren ist aus dem Vortragsbericht "A new process for reducing the moisture content of filter cake" bekannt, welcher von G. Burton auf dem "Fourth international coal preparation congress 1962" gehalten wurde. Hierin wird vorgeschlagen, einen Filterkuchen mit einem überhitzten, Luftanteile aufweisenden Dampf zu beaufschlagen, um eine Viskositätsreduzierung und Wärmeeinbringung zu erreichen. Jedoch besteht auch bei diesem Verfahren das Problem, daß zuerst die Grobkapillaren entleert werden. Dies führt zu vorzeitiger lokaler Gasdurchströmung und somit zur Rißbildung.

Aus DE-A-36 14 668 ist ein Druckfilter mit den Merkmalen des Oberbegriffs des Anspruchs 7 bekannt. Eine gezielte Beaufschlagung des Filterkuchens mit einem Behandlungsfluid ist nicht möglich.

**Aufgabe** der vorliegenden Erfindung ist es, ein Verfahren der eingangs genannten Gattung zu schaffen, das eine Entfeuchtung des durch Filtration geschaffenen Filterkuchens ohne Rißbildung zuläßt. Eine weitere Aufgabe ist es, eine Vorrichtung zur Durchführung dieses Verfahrens anzugeben, bei der der Filterkuchen gezielt mit einem Behandlungsfluid beaufschlagt werden kann.

Verfahrensmäßig wird die Aufgabe durch die im Anspruch 1 angegebenen kennzeichnenden Merkmale gelöst. Bei diesem Verfahren kondensiert das Behandlungsfluid im Filterkuchen, wobei die im Filterkuchen ursprünglich vorhandene Mutterflüssigkeit verdrängt wird und wobei gleichzeitig weitere Schadstoffe aus dem Filterkuchen ausgewaschen werden.
Das Ersetzen der Mutterflüssigkeit durch das Behandlungsfluid sorgt dafür, daß keine Rißbildung auftritt.

Vorteilhaft ist dabei insbesondere eine Weiterbildung, bei welcher ein kolbenströmungsartiges Verdrängen der Mutterflüssigkeit aus dem Filterkuchen bewirkt wird. Idealerweise bildet sich dabei zwischen der Mutter- und der Behandlungsflüssigkeit eine scharfe Verdrängungsfront aus.

Eine Wiederholung dieses Durchströmungsprozesses nach Zwischenkühlen des Filterkuchens steigert die Wirksamkeit des Verfahrens insbesondere bezüglich der Auswaschwirkung.

Besitzt das Behandlungsfluid die Eigenschaften einer geringen Ionenstärke, einer geringen Ionenkonzentration und eines milden, im wesentlichen neutralen pH-Wertes, so wird die zwischen den einzelnen Partikeln des Filterkuchens befindliche Mutterflüssigkeit durch eine weitgehend neutrale Flüssigkeit weitgehend ausgetauscht. Hierdurch werden die elektrischen Wechselwirkungen zwischen den Partikeln geschwächt und ein geringerer Abstand dieser Festkörper ermöglicht. Der Kuchen schrumpft mit zunehmender Entfeuchtung. Bei einem Sättigungsgrad von ca. 80 % erreichen die Zugspannungen ein Maximum und es kommt zur Rißbildung, falls die Flüssigkeitsbrücken zwischen zwei oder mehr Partikeln die Kräfte nicht mehr aufnehmen können.

Das Schrumpfen des Filterkuchens und damit die Neigung zur Rißbildung während der Entfeuchtung sind um so stärker, je größer der Abstand der Partikel zueinander zu Beginn oder während der Entfeuchtung ist. Verantwortlich dafür, daß die Partikel nicht immer schon bei der Bildung des Kuchens in gegenseitigen Kontakt treten, sind unter anderem elektrostatische Wechselwirkungen zwischen den Partikeln und zwischen den Partikeln und der Mutterflüssigkeit. Diese Wechselwirkungen sind um so bedeutender, je kleiner die Partikel sind. Außerdem werden sie durch die elektrische Ladung der Partikel, durch die Ionenstärke und durch den pH-Wert der im Filterkuchen enthaltenen Flüssigkeit beeinflußt, so daß der beim erfindungsgemäßen Verfahren durchgeführte Austausch der Mutterflüssigkeit durch ein Behandlungsfluid mit den erwährten Eigenschaften eine größere Partikeldichte und damit eine Abnahme der zwischen den Partikeln herrschenden Zugspannungen bewirkt, was die Gefahr der Rißbildung herabsetzt.

Weiterhin ist vorteilhaft, daß das Behandlungsfluid bzw. die durch Kondensation daraus entstehende Behandlungsflüssigkeit eine große Kapazität besitzt, flüchtige oder lösliche Bestandteile aus dem Filterkuchen aufzunehmen. In diesem Sinne können als Behandlungsfluid Lösungsmittel verwendet werden, z.B. Alkohol, Aceton, Schwefelsäure oder Natronlauge. Auf diese Weise erfolgt eine Auswaschung oder Extraktion auch solcher Bestandteile, ohne daß eine vorherige Entfeuchtung des Filterkuchens mit der Gefahr der Rißbildung erfolgen muß.

Weitere vorteilhafte Weiterbildungen des Verfahrens gemäß der Erfindung sind in abhängigen Ansprüchen beschrieben.

Eine Vorrichtung zur Durchführung des Verfahrens gemäß der Erfindung ist in den abhängigen Vorrichtungsansprüchen angegeben. Der Filterkuchen wird vom Behandlungsfluid unterhalb einer Haube beaufschlagt, wobei der restliche Bereich einem anderen Gas ausgesetzt ist.

Bei Verfahren der Druckfiltration oder gekapselten Vakuumfiltration kann der gesamte Verfahrensraum oder vorteilhafterweise innerhalb des Verfahrensraumes nur der oberhalb des Filterkuchens durch eine innere, zusätzliche Kapsel abgetrennte Behandlungsraum mit dem Behandlungsfluid beaufschlagt werden. Gemäß einer weiteren Ausgestaltung wird der Gasaustausch zwischen den beiden Druckräumen minimiert, ohne daß aufwendige Abdichtungen vorgesehen sein müssen. Die geringe Wärmeleitfähigkeit des im ersten Druckraum enthaltenen Gases sorgt für eine Wärmeisolierung des Filterkuchens gegenüber der Außenumgebung der Vorrichtung und erhöht somit den Wirkungsgrad.

Die Erfindung wird nachfolgend anhand eines Beispiels unter Bezugnahme auf die Zeichnung beschrieben. In dieser zeigen:
- Fig. 1: einen Querschnitt durch eine bekannte Vorrichtung, die zur Durchführung des Verfahrens geeignet ist, und
- Fig. 2: einen Querschnitt durch eine erfindungsgemäße Vorrichtung zur Durchführung des Verfahrens.

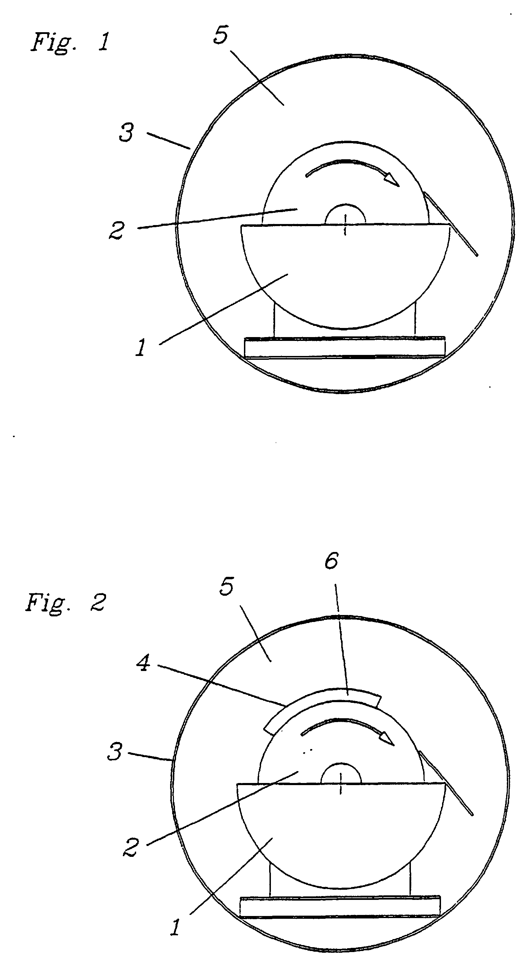

Eine aus dem Stand der Technik bekannte Vorrichtung zur Durchführung des erfindungsgemäßen Verfahrens ist in Fig. 1 angegeben. Dort ist ein Trommelfilter 2 komplett in ein druckdichtes Gehäuse 3 eingebaut, das einen ersten Druckraum 5 umschließt. Der Druckraum 5 ist im Betrieb vollständig mit dem gasförmigen Behandlungsfluid gefüllt.
Das gasförmige Behandlungsfluid bewirkt hierbei die Verfahrensschritte Kuchenbilden, Waschen und Entfeuchten.

Fig. 2 zeigt eine Ausführungsform einer Vorrichtung zur Durchführung des Verfahrens gemäß der Erfindung, bei der ein Trommelfilter 2 in einem Suspensionstrog 1 umläuft. Auch hier sind Suspensionstrog 1 und Trommelfil ter 2 von einem Gehäuse 3 umgeben, das einen Druckraum 5 umschließt. Der Druckraum 5 ist mit einem unter Druck stehenden Gas gefüllt, das bei Umgebungsbedingungen gasförmig vorliegt. Dieses Gas bewirkt den zur Kuchenbildung und zur Entfeuchtung notwendigen Differenzdruck.

Auf einem Bereich des Umfangs der Filtertrommel außerhalb des Suspensionstrogs ist eine diesen Umfangsabschnitt des Trommelfilters 2 übergreifende Haube 4 vorgesehen, die zusammen mit dem Umfangsabschnitt des Trommelfilters bzw. der Außenumfangsfläche des darauf liegenden Filterkuchens einer zweiten Druckraum 6 umschließt. Der Druckraum 6 umschließt einzelne Verfahrenszonen bei der Kuchenbehandlung, aber auch den gesamten Verfahrensabschnitt außerhalb der Kuchenbildung. In diesem Fall kann selbst die Kuchenbildung durch den Druck des Behandlungsfluides bewirkt werden.

In dem zweiten Druckraum 6 befindet sich das gasförmige Behandlungsfluid, das vorzugsweise die Aufgabe besitzt, den Kuchen unter Vermeidung von Rißbildung zu waschen bzw. lösliche Bestandteile aus diesem zu extrahieren. Zwischen dem zweiten Druckraum 6 und dem ersten Druckraum 5 herrscht nahezu keine Druckdifferenz, so daß ein Überströmen der unterschiedlichen Gase gering gehalten wird. Eine geringe Wärmeleitfähigkeit des im ersten Druckraum 5 enthaltenen Gases verhindert neben weiteren vorteilhaften Effekten Wärmeverluste des Behandlungsfluids und somit eine vorzeitige Kondensation.

Die bei der Entfeuchtung eines Filterkuchens üblicherweise auftretende Rißbildung verschlechtert das verfahrenstechnische Ergebnis. Die Entfeuchtungsluft sucht sich dann den Weg des geringsten Widerstandes und strömt im Bypass durch die entstandenen Risse und nicht mehr durch die Kapillaren des zu entfeuchtenden Filterkuchens. Hierbei kann es schnell zum Erreichen der Kapazitätsgrenze des Verdichters kommen, der die Filtrationsdruckdifferenz erzeugt, woraufhin sich als weitere Konsequenz der anliegende Differenzdruck erniedrigt. Die Folge ist ein geringerer Massendurchsatz des Filters bei gestiegener Restfeuchte und daraus evtl. resultierender ungenügender Entfeuchtung.

Auch beim Waschen des Filterkuchens auf dem Filter strömt dann ein Großteil der Waschflüssigkeit ungenutzt durch die Risse, wodurch der gewünschte Auswaschgrad nicht erzielt wird. Weiterhin steigen die Kosten einer nachgeschalteten thermischen Trocknung mit einer höheren Restfeuchte des Kuchens an. Darüberhinaus steigt bei ungenügender Waschung auf dem Filter der Bedarf an Waschflüssigkeit und es wird möglicherweise ein zusätzlicher Reinigungsschritt notwendig.

Beim Verfahren zur Filtration gemäß der vorliegenden Erfindung wird zur mechanischen Entfeuchtung mittels Differenzdruck die gasförmige Phase einer Flüssigkeit eingesetzt, die bei den auf der Unterseite des Filterkuchens herrschenden Bedingungen von Druck und Temperatur flüssig vorliegt, wobei aber die gasförmige Phase im Filterkuchen auf Grund eines Differenzdruckabbaus kondensiert. Der anfiltrierte Filterkuchen wird noch vor Porenentleerung und Einsetzen der Schrumpfung mit dem Behandlungsfluid beaufschlagt. Es kann jedoch auch bereits die Kuchenbildung mit Hilfe dieses Behandlungsfluids erfolgen.

Die Temperatur des Behandlungsfluids oberhalb des Filterkuchens kann deutlich über der Umgebungstemperatur liegen, damit das Behandlungsfluid gasförmig vorliegt. Da zur Bildung des Filterkuchens und zur Entfeuchtung ein Differenzdruck erforderlich ist, kann der Druck des Behandlungsfluids in seinem gasförmigen Zustand höher als der Normaldruck in der Umgebung sein. Der thermodynamische Zustandspunkt des Gases sollte dabei aber nicht allzuweit vom Kondensationspunkt entfernt liegen. Wird nach erfolgter Bildung des Filterkuchens aus einer Suspension, deren Temperatur geringer ist als die des Behandlungsfluids im gasförmigen Zustand, der gesättigte Filterkuchen mit dem gasförmigen Behandlungsfluid in Kontakt gebracht, so dringt das Behandlungsfluid aufgrund der anliegenden Druckdifferenz in den Filterkuchen ein.

Im Filterkuchen kühlt sich das gasförmige Behandlungsfluid an den kälteren Partikeln, an kälteren Porenflächen und an Flüssigkeitsoberflächen rasch ab. Soeben entstandene Poren, die mit Gas gefüllt gewesen sind, füllen sich nun mit dem Kondensat des Behandlungsfluids; der Filterkuchen bleibt in diesem Bereich gesättigt. Durch die freiwerdende Kondensationsenthalpie wird dem Filterkuchen ständig Wärme zugeführt, so daß seine Temperatur in der Kondensationszone bis auf die Gastemperatur ansteigt. Während dieser Aufheizung wird die ursprünglich vorhandene Mutterflüssigkeit durch ständig anfallendes Kondensat des Behandlungsfluids aufgrund der Filtrationsdruckdifferenz verdrängt.

Diese beschriebenen Vorgänge spielen sich zunächst nur in der obersten Schicht des Filterkuchens ab, die direkt mit dem gasförmigen Behandlungsfluid in Kontakt steht. Ein sofortiges weiteres Vordringen des gasförmigen Behandlungsfluids in tiefere Filterkuchenschichten wird durch Abkühlung und Kondensation vermieden. So finden diese Vorgänge nur in einem schmalen Bereich, einer Kondensationsfront, statt.

Sobald der Filterkuchen innerhalb der Kondensationfront durch die Kondensationsenthalpie bis auf die Gastemperatur aufgeheizt ist, bleiben die Poren mit Gas gefüllt und die Kondensatonsfront verschiebt sich ein Stück weiter ins Innere des Filterkuchens. Allmählich durchwandert diese Front den gesamten Filterkuchen bis zum Filtermedium.

Für ein schrittweises Druchdringen des Behandlungsfluides durch den Filterkuchen werden Druck und Temperatur derart eingestellt, daß das Behandlungsfluid zunächst in einen ersten Bereich des Filterkuchens von der gasförmigen Phase in die flüssige Phase übergeht und den Filterkuchen hier durch die entstehende Kondensationswärme erhitzt, so daß das Erhitzen des Filterkuchens ein weiteres Einströmen des Fluids in seiner gasförmigen Phase in den ersten Bereich des Filters bewirkt, wodurch der Kondensationsprozeß in einen zweiten, tiefer gelegenen Bereich des Filterkuchens verlagert wird, und daß dieser Prozeß so lange wiederholt wird, bis die Kondensationsfront den Filterkuchen durchwandert hat.

Durch eine geringe Ionenstärke und Ionenkonzentration sowie einen "milden", im wesentlichen neutralen pH-Wert werden elektrische Wechselwirkungen zwischen den Partikeln des Filterkuchens vermindert und der Rißbildung bei der Entfeuchtung entgegengewirkt. Außerdem besitzt das reine Kondensat eine große Kapazität, lösliche Stoffe aus dem Filterkuchen auszuwaschen oder zu extrahieren.

Während bei üblichen Filtrationssystemen zwei Komponenten, Feststoff und Flüssigkeit, voneinander getrennt werden, wird beim Waschen eine weitere Komponente, die Waschflüssigkeit bzw. das Behandlungsfluid, mit in den Prozeß eingebracht. Beim Verfahren gemäß der vorliegenden Erfindung besteht nun die Möglichkeit, ein noch komplexeres Trennungsverfahren für Systeme mit noch mehr Komponenten zu verwirklichen. So ist denkbar, daß sich außer Feststoff, Mutterflüssigkeit und Behandlungsfluid noch ein weiterer Stoff oder mehrere davon im Filterkuchen befinden, die allerdings mit dem Behandlungsfluid ausgetragen werden können. In diesem Fall kann durch die beim Verfahren gemäß der vorliegenden Erfindung auftretende freie Dampfdurchströmung auch eine Extraktion vierter oder weiterer Komponenten erfolgen.

Sollte nach erfolgtem Durchlaufen der Kondensationsfront der gewünschte Auswaschgrad noch nicht erreicht sein, so besteht die Möglichkeit, den Filterkuchen durch Aufsprühen einer kalten Flüssigkeit zwischenzukühlen und erneut eine weitere Kondensationsfront durchlaufen zu lassen.

## Patentansprüche

1. Verfahren zur mechanischen Entfeuchtung eines auf einer Filterfläche gebildeten Filterkuchens, bei dem der Filterkuchen in mit einer Flüssigkeit gesättigtem Zustand vorliegt und bereits vor einer Porenentleerung und vor dem Einsetzen einer Rißbildung auf seiner von der Filterfläche abgewandten Seite mit einem gasförmigen Behandlungsfluid beaufschlagt wird, wobei das Behandlungsfluid den Filterkuchen aufgrund einer anliegenden Druckdifferenz zur Filterfläche hindurchströmt und dabei im Filterkuchen kondensiert, **dadurch gekennzeichnet, daß** ein bestimmter Druck und eine bestimmte Temperatur des gasförmigen Behandlungsfluides derart eingestellt werden:
- daß der thermodynamische Zustandspunkt des gasförmigen Behandlungsfluides in der Nähe des Kondensationspunktes liegt, wodurch das Behandlungsfluid zunächst in die oberste Filterkuchenschicht eindringt, rasch abkühlt und kondensiert und in einem schmalen Bereich eine Kondensationsfront gebildet wird, in welchem der Filterkuchen auf die bestimmte Temperatur des gasförmigen Behandlungsfluides erwärmt wird,
- daß entsprechend der Aufheizung auf die bestimmte Temperatur des gasförmigen Behandlungsfluides die Kondensationsfront allmählich zur Filterfläche hin verschoben wird, und
- daß der Filterkuchen durch das Behandlungsfluid auf die bestimmte Temperatur des gasförmigen Behandlungsfluides aufgeheizt wird.

2. Verfahren nach Anspruch 1,
**dadurch gekennzeichnet,**
**daß** die gasförmige Phase des Behandlungsfluids als Druckmedium zur Erzeugung des die Druckdifferenz bewirkenden Differenzdrucks verwendet wird.

3. Verfahren nach Anspruch 1 oder 2,
**dadurch gekennzeichnet,**
**daß** der Filterkuchen nach dem Eindringen der Kondensationsfront in den Filterkuchen abgekühlt wird und daß anschließend erneut gasförmiges Behandlungsfluid in den Filterkuchen eingeleitet wird, um den Durchwanderungsprozeß einer Kondensationsfront durch den Filterkuchen zu wiederholen.

4. Verfahren nach einem der vorhergehenden Ansprüche,
**dadurch gekennzeichnet,**
**daß** als Behandlungsfluid ein Lösungsmittel verwendet wird, insbesondere Alkohol, Aceton, Schwefelsäure oder Natronlauge.

5. Verfahren nach einem der vorhergehenden Ansprüche,
**dadurch gekennzeichnet,**
**daß** bereits die Bildung des Filterkuchens unter Einsatz des Behandlungsfluids als Druckmedium erfolgt.

6. Verfahren nach einem der vorhergehenden Ansprüche, **dadurch gekennzeichnet, daß** ein Behandlungsfluid und auch ein daraus entstehendes Kondensat mit einer geringen lonenstärke, einer geringen lonenkonzentration, einem "milden", im wesentlichen neutralen pH-Wert verwendet wird, welches einen Auswasch- und Extraktionscharakter für aus dem Filterkuchen auszutragende Bestandteile aufweist.

7. Vorrichtung, insbesondere zur Durchführung eines Verfahrens nach einem der Ansprüche 1 bis 6, mit einer Filterfläche (2) und einem Suspensionstrog (1), die in einem Gehäuse (3) angeordnet sind, wobei die Filterfläche (2) teilweise im Suspensionstrog (1) angeordnet ist und das Gehäuse (3) druckdicht als ein erster Druckraum (5) zum Aufnehmen eines unter Überdruck stehenden Gases ausgebildet ist,
**dadurch gekennzeichnet,**
**daß** innerhalb des Gehäuses (3) eine Haube (4) vorgesehen ist, welche nur einen Abschnitt der außerhalb des Suspensionstroges liegenden Filterfläche (2) übergreift, und daß die Haube (4) zusammen mit der Filterfläche (2) einen zweiten Druckraum (6) für ein Behandlungsfluid umschließt, welches zum Entfeuchten eines auf der Filterfläche (2) gebildeten Filterkuchens mittels Durchströmen und Kondensieren in dem Filterkuchen vorgesehen ist.

8. Vorrichtung nach Anspruch 7,
**dadurch gekennzeichnet,**
**daß** die Drücke im ersten Druckraum (5) und im zweiten Druckraum (6) im wesentlichen gleich sind.

## Claims

1. Method for the mechanical removal of moisture from a filter cake formed on a filtering surface,
wherein the filter cake is saturated with a liquid and exposed with its side facing away from the filtering surface a gaseous treatment fluid prior to a draining of pores and an onset of crack formation, wherein the treatment fluid flows through the filter cake to the filtering surface as a result of an applied pressure difference and thereby condenses within the filter cake,
**Characterized in that**
a defined pressure and a defined temperature of the gaseous treatment fluid is set such
- that the thermodynamic state-point of the gaseous treatment fluid is near the condensation point, thereby the treatment fluid initially penetrates into a top layer of the filter cake, rapidly cools and condenses and a condensation front is formed in a small area, in which the filter cake is heated up by the gaseous treatment fluid to the defined temperature of the gaseous treatment fluid,
- that the condensation front is progressively displaced towards the filtering surface according to the heating up to the defined temperature of gaseous treatment fluid, and
- that the filter cake is heated up to the defined temperature of the gaseous treatment fluid.

2. Method according to claim 1,
**characterized in that**
the gas phase of the treatment fluid is used as a pressure medium for generating a differential pressure bringing about the pressure difference.

3. Method according to claim 1 or 2,
**Characterized in that**
the filter cake is cooled after the condensation front has penetrated into the filter cake, and after the gaseous treatment fluid is again introduced into the filter cake for repeating the process of displacing a condensation front through the filter cake.

4. Method according to one of the preceding claims,
**Characterized in that**
a solvent, particularly alcohol, acetone, sulphuric acid or soda lye is used as the treatment fluid.

5. Method according to one of the preceding claims,
**characterized in that**
the formation of the filter cake takes place using the treatment fluid as a pressure medium.

6. Method according to one of the preceding claims,
**characterized in that**
the treatment fluid and a condensate produced therefrom having a low ionic strength, a low ion concentration, a mild, essentially neutral pH value is used, exhibiting a wash-out and extraction character for substances being extracted from the filter cake.

7. Apparatus, particularly for implementing a method according to one of the claims 1 to 6, comprising a filtering surface (2) and a suspension trough (1), which are arranged in a housing (3),
wherein the filtering surface (2) is partly arranged in the suspension trough (3) and the housing (3) is designed pressure-tight as a first pressure-chamber (5) for receiving a pressurized gas,
**characterized in that**
inside the housing (3) a hood (4) covering at least a section of the filtering surface (2) outside the suspension trough (1) is provided, and the hood (4) together with the filtering surface (2) encloses a second pressure-chamber (6) for the treatment fluid for removing of moisture from a filter cake being formed on the filtering surface (2) by flowing through and condensing in the filter cake.

8. Apparatus according to claim 7,
**characterized in that**
the pressure in the first pressure-chamber (5) and in the second pressure-chamber (6) are essentially the same.

## Revendications

1. Procédé de déshumidification mécanique d'un gâteau de filtre formé sur une surface filtrante, dans lequel le gâteau de filtre est présent dans un état saturé avec un liquide et est exposé avec un fluide de traitement gazeux avant une vidange de ses pores et avant l'amorçage d'une fissuration sur son côté opposé à la surface filtrante, le fluide de traitement traversant le gâteau de filtre en raison d'une différence de pression existant par rapport à la surface filtrante et se condensant dans le gâteau de filtre, ***caractérisé en ce qu***'une certaine pression et une certaine température du fluide de traitement gazeux sont ajustées de telle sorte :
- que le point représentant l'état thermodynamique du fluide de traitement gazeux se trouve près du point de condensation, de façon que le fluide de traitement pénètre d'abord dans la couche supérieure du gâteau de filtre, refroidit rapidement et se condense et il se forme dans une zone étroite un front de condensation dans lequel le gâteau de filtre est chauffé à la température déterminée du fluide de traitement gazeux,
- qu'en fonction du chauffage à la température déterminée du fluide de traitement gazeux, le front de condensation soit déplacé progressivement vers la surface filtrante, et
- que le gâteau de filtre soit chauffé par le fluide de traitement à la température déterminée du fluide de traitement gazeux.

2. Procédé selon la Revendication 1, ***caractérisé en ce que*** la phase gazeuse du fluide de traitement est employée comme milieu sous pression pour produire la pression différentielle provoquant la différence de pression.

3. Procédé selon la Revendication 1 ou 2, ***caractérisé en ce que*** le gâteau de filtre est refroidi après la pénétration du front de condensation dans le gâteau de filtre et ***en ce qu***'ensuite, du fluide de traitement gazeux est de nouveau envoyé dans le gâteau de filtre pour répéter le processus de traversée d'un front de condensation à travers le gâteau de filtre.

4. Procédé selon l'une quelconque des Revendications précédentes, ***caractérisé en ce qu***'on utilise un solvant comme fluide de traitement, en particulier un alcool, de l'acétone, de l'acide sulfurique ou de la soude.

5. Procédé selon l'une quelconque des Revendications précédentes, ***caractérisé en ce que*** la formation du gâteau de filtre se produit déjà en utilisant le fluide de traitement comme milieu sous pression.

6. Procédé selon l'une quelconque des Revendications précédentes, ***caractérisé en ce qu****'on* utilise un fluide de traitement et un condensat en résultant à faible pouvoir ionique, faible concentration ionique, pH "doux" essentiellement neutre, qui présente un caractère de lavage et d'extraction pour des substances à extraire du gâteau de filtre.

7. Dispositif, en particulier pour mettre en oeuvre un procédé selon l'une quelconque des Revendications 1 à 6, avec une surface filtrante (2) et un bac à suspension (1) qui sont placés dans un boîtier (3), la surface filtrante (2) étant placée partiellement dans le bac à suspension (1) et le boîtier (3) étant formé étanche à la pression sous forme d'une première chambre de pression (5) afin de recevoir un gaz sous pression positive,
***caractérisé en ce qu***'il est prévu dans le boîtier (3) un capot (4) qui recouvre seulement une section de la surface filtrante (2) située à l'extérieur du bac à suspension, et ***en ce que*** le capot (4) entoure, avec la surface filtrante (2), une deuxième chambre de pression (6) pour un fluide de traitement, lequel est prévu pour déshumidifier un gâteau de filtre formé sur la surface filtrante (2) par traversée et condensation dans le gâteau de filtre.

8. Dispositif selon la Revendication 7, ***caractérisé en ce que*** les pressions dans la première chambre de pression (5) et dans la deuxième chambre de pression (6) sont sensiblement égales.
